# EUROPÄISCHE PATENTSCHRIFT

(11) **EP 2 440 759 B1**
(45) Veröffentlichungstag und Bekanntmachung des Hinweises auf die Patenterteilung: **30.07.2014**
(21) Anmeldenummer: 10722115.2
(22) Anmeldetag: 07.06.2010
(51) Int. Cl.: F01N 13/18

(54) **ABGASBEHANDLUNGSVORRICHTUNG FÜR DEN MOTORNAHEN EINSATZ**
EXHAUST GAS TREATMENT DEVICE FOR USE NEAR AN ENGINE
DISPOSITIF DE TRAITEMENT DE GAZ D'ÉCHAPPEMENT DESTINÉ À ÊTRE MONTÉ À PROXIMITÉ DU MOTEUR

(30) Priorität: 12.06.2009 DE 102009024718
(43) Veröffentlichungstag der Anmeldung: 18.04.2012
(60) Teilanmeldung: 13180533.5
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); JOHANSSON, Conny, S-416 67 Göteborg (SE); LAURELL, Mats, S-413 17 Göteborg (SE)
(74) Vertreter: Kahlhöfer, Hermann
(86) Internationale Anmeldenummer: PCT/EP2010/057938
(87) Internationale Veröffentlichungsnummer: WO 2010/142647

(56) Entgegenhaltungen:
- EP-A1- 0 931 913
- US-B1- 6 250 075

## Beschreibung

Die vorliegende Abgasbehandlungsvorrichtung umfasst ein Gehäuse, in dem zumindest eine Abgasbehandlungseinheit vorgesehen ist, mit der unerwünschte bzw. schädliche Bestandteile eines Abgases zurückgehalten und/oder konvertiert werden. Diese Abgasbehandlungsvorrichtung kann somit beispielsweise wenigstens ein Element aus der Gruppe katalytisch aktiver Konverter, Partikelabscheider, Adsorber und dergleichen aufweisen, wobei diese Elemente regelmäßig Oberflächen ausbilden, die mit dem Abgas in der gewünschten Weise in Kontakt gebracht werden. Hierzu werden vielfach auch so genannte Wabenkörper eingesetzt, die eine Vielzahl von Kanälen aufweisen, durch die Abgas strömen kann. Dabei ist möglich, dass zumindest ein Teil des Abgases auch durch die Wandungen solcher Wabenkörper hindurch tritt, wobei beispielsweise poröse Materialien, Öffnungen, Strömungsumlenkungen und dergleichen vorgesehen sein können.

Üblicherweise werden zur Behandlung von Abgasen aus mobilen Verbrennungskraftmaschinen (insbesondere Benzin, Diesel oder dergleichen) mehrere Abgasbehandlungseinheiten eingesetzt, die in einem Abgasstrang der Verbrennungskraftmaschine nacheinander und/oder parallel zueinander angeordnet sind. Da für viele Umwandlungsprozesse der Schadstoffe im Abgas eine höhere Temperatur vorteilhaft ist, ist man bestrebt, diese Abgasbehandlungseinheiten nahe dem Motor bzw. im Motorraum anzuordnen. Dies ist jedoch regelmäßig sehr problematisch aufgrund der engen Platzverhältnisse in diesem Bereich des Kraftfahrzeuges. Dies tritt auch dann in besonderem Maße auf, wenn das Kraftfahrzeug bzw. die Abgasanlage mit einem Abgas-Turbolader ausgeführt ist.

Unter den oben genannten Bedingungen war man stets bestrebt, relativ kleinvolumige Abgasbehandlungseinheiten vorzusehen, so dass das insgesamt erforderliche Volumen bzw. die benötigte Oberfläche für eine vollständige Umsetzung der im Abgas enthaltenen Schadstoffe gegebenenfalls aufgeteilt und in den Unterboden des Kraftfahrzeugs verlegt wurde. Außerdem sind auch Konzepte bekannt, bei denen konzentrische Ringe mit in unterschiedlichen Richtungen durchströmtbaren Abgasbehandlungseinheiten vorgesehen sind, die bereits eine platzsparende Anordnung im Motorraum ermöglichen sollen.

Die US 6,250,075 B1 beschreibt einen Abgasschalldämpfer für kleine Maschinen, wie z. B. für eine Motorsense oder eine Kettensäge. In diesen Geräten soll eine Nachverbrennung von unverbrannten Abgasbestandteilen bei gleichzeitiger Erhöhung der Reinigungsleistung bzw, des Reinigungsergebnisses erreicht werden. Dies wird durch einen konkaven Körper mit katalytischer Beschichtung bewerkstelligt, der zugleich eine Temperaturkonzentration für die Verbrennung durch die Schalenform und eine Schalldämpfung durch Umlenkung der Abgase bewirkt. Ziel ist es dabei insbesondere, einen verlängerten Abgasweg durch den Schalldämpfer zu erzeugen.

Gleichwohl besteht das Bedürfnis, die Integrationsmöglichkeiten solcher Abgasbehandlungsvorrichtungen zu verbessern, insbesondere auch bei relativ großvolumigen Abgasbehandlungseinheiten. Hierbei sollen insbesondere Eckräume im Motorumfeld besser ausgenutzt werden. Zudem soll die Montage bzw. Nachrüstung solcher Systeme weiter vereinfacht werden.

Hiervon ausgehend ist es Aufgabe der vorliegenden Erfindung, die mit Bezug auf den Stand der Technik geschilderten Probleme zumindest teilweise zu lösen. Insbesondere soll eine Abgasbehandlungsvorrichtung angegeben werden, die eine besonders platzsparende Anordnung von Abgasbehandlungseinheiten in motomaher Umgebung ermöglicht. Zudem soll diese Vorrichtung einfach montierbar sein und gelegentlich auch Wartungsarbeiten ermöglichen. Die Vorrichtung soll insbesondere im Zusammenhang mit Kraftfahrzeugen, aufweisend einen Turbolader, eine platzsparende Integration der Abgasbehandlungsvorrichtung in der Nähe des Motors ermöglichen.

Diese Aufgaben werden gelöst mit den Merkmalen des Patentanspruchs 1. Weitere vorteilhafte Ausgestaltungen und besonders bevorzugte Anwendungsgebiete werden in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung und gibt weitere Ausführungsbeispiele an.

Die erfindungsgemäße Abgasbehandlungsvorrichtung weist zumindest ein Gehäuse und eine beabstandet zum Gehäuse angeordnete zweite Abgasbehandlungseinheit auf, wobei die zweite Abgasbehandlungseinheit in das Gehäuse hineinragt, und eine seitlich zur zweiten Abgasbehandlungseinheit angeordnete Öffnung im Gehäuse, die sich seitlich zumindest über 50 % der hineinragenden zweiten Abgasbehandlungseinheit erstreckt.

Die Abgasbehandlungseinheit bildet insbesondere eine interne Strömungsumlenkung aus, wobei das aus der zweiten Abgasbehandlungseinheit austretende Abgas zumindest teilweise (insbesondere vollständig) so umgelenkt wird, dass es in einen zwischen dem Gehäuse und der in das Gehäuse hineinragenden zweiten Abgasbehandlungseinheit gebildeten Umgebungsbereich einströmt und dort über die Öffnung wieder das Gehäuse verlässt. Folglich wird das Abgas beim Eintritt durch die zweite Abgasbehandlungseinheit hindurch in das Gehäuse eingeleitet, umgelenkt, außen zumindest an einem Teil der zweiten Abgasbehandlungseinheit entlang geführt und dann über die Öffnung wieder aus dem Gehäuse entfernt. Dabei ist bevorzugt, dass die zweite Abgasbehandlungseinheit mit dem überwiegenden Anteil ihrer Länge in das Gehäuse hineinragt und zumindest 50 % der Öffnung seitlich zur zweiten Abgasbehandlungseinheit, also gegenüberliegend zur Umfangsfläche der zweiten Abgasbehandlungseinheit, angeordnet ist. Dementsprechend ist die Öffnung auch relativ groß ausgeführt, insbesondere mit einem Durchmesser von mindestens 50 mm [Millimeter] oder sogar 80 mm. Dies eröffnet insbesondere auch die Möglichkeit, in bzw. an der Öffnung direkt eine weitere Abgasbehandlungseinheit zu positionieren. Das bedeutet mit anderen Worten aber auch, dass der Durchmesser der Öffnung, der seitlich benachbart zur zweiten Abgasbehandlungseinheit positioniert ist, den Großteil des hineinragenden Anteils der Länge der zweiten Abgasbehandlungseinheit überdeckt (in Längsrichtung der zweiten Abgasbehandlungseinheit).

Nur der Vollständigkeit halber sei darauf hingewiesen, dass die hier verwendeten Bezeichnungen von Teilen der Erfindung mit "erste", "zweite", "dritte" nur der Unterscheidung dienen, damit aber regelmäßig keine Rangfolge, Reihenfolge oder dergleichen zum Ausdruck gebracht werden soll.

Weiterhin weist die Abgasbehandlungsvorrichtung zumindest einen ersten Gehäuseabschnitt mit einer Öffnung und mindestens einen vom ersten Gehäuseabschnitt hervorstehenden zweiten Gehäuseabschnitt auf. Dieser zweite Gehäuseabschnitt ist schräg zum ersten Gehäuseabschnitt an dessen Öffnung angeordnet, bildet eine Verbindung an der Öffnung und umfasst eine erste Abgasbehandlungseinheit.

Bei dem ersten Gehäuseabschnitt handelt es sich beispielsweise um einen gegenüber dem Querschnitt der üblichen Abgasleitung verbreiterten bzw. vergrößerten Sammelraum für die Abgase. Der erste Gehäuseabschnitt ist regelmäßig aus Metall gefertigt, insbesondere aus einem hochtemperaturfesten und korrosionsbeständigen Material. Der zweite Gehäuseabschnitt umfasst bevorzugt im Wesentlichen dasselbe Material wie der erste Gehäuseabschnitt. Der erste Gehäuseabschnitt und der zweite Gehäuseabschnitt bilden im gefügten bzw. miteinander verbundenen Zustand ein komplettes Gehäuse aus, das insbesondere zwei Abgasleitungen miteinander verbindet. Das Gehäuse ist dabei bevorzugt so gestaltet, dass hiermit eine Richtungsumkehr bzw. -umlenkung der Abgasströmung erreicht wird. Dies wird dadurch zum Ausdruck gebracht, dass der zweite Gehäuseabschnitt schräg an der Öffnung des ersten Gehäuseabschnitts angeordnet ist. Das heißt mit anderen Worten auch, dass die Öffnung beispielsweise nicht fluchtend bzw. gegenüberliegend zum Einströmbereich für das Abgas angeordnet ist. Geht man davon aus, dass die Abgasleitungen hin bzw. weg von beiden Gehäuseabschnitten eine Strömungsrichtung definieren, so bilden beide Strömungsrichtun gen einen Winkel zueinander, so dass eine Strömungsumlenkung ausgebildet ist. Dabei ist bevorzugt, dass das Abgas im Bereich des ersten Gehäuseabschnitts umgelenkt wird und dann durch die Öffnung in den zweiten Gehäuseabschnitt (vollständig) einströmt. Insoweit bildet der erste Gehäuseabschnitt (selbständig) ein (freies) Volumen aus, in dem das gesamte Abgas umgelenkt wird. Damit ist beispielsweise zumindest die Hälfte des vom ersten Gehäuseabschnitt eingeschlossenen Volumens frei von Einbauten.

Die Öffnung hin zum zweiten Gehäuseabschnitt ist bevorzugt so groß, dass durch die Öffnung hindurch direkt die in dem zweiten Gehäuseabschnitt angeordnete erste Wartungseinheit gleichmäßig angeströmt werden kann. Ist die erste Abgasbehandlungseinheit beispielsweise mit einem Wabenkörper gebildet, sind durch die Öffnung demnach bevorzugt alle Kanäle gleichermaßen einsehbar bzw. beströmbar. Die Anordnung der ersten Abgasbehandlungseinheit erfolgt dabei bevorzugt so, dass an der Stirnseite der ersten Abgasbehandlungseinheit im Wesentlichen parallel zur Öffnung, insbesondere in unmittelbarer Nähe oder sogar in der gleichen Ebene wie die Öffnung positioniert ist. Um dabei gleichermaßen eine kompakte Anordnung zu erreichen, ist die Verbindung (nur) außen an den Gehäuseabschnitten vorgesehen.

Demnach ist ganz besonders bevorzugt, dass die Verbindung mit einem Flansch ausgeführt ist und die eine erste Abgasbehandlungseinheit sich bis zum Flansch erstreckt. Als "Flansch" wird insbesondere ein umlaufender, auswärts gerichteter Kragen angesehen, der um die Öffnung herum, und ganz besonders bevorzugt um beide Gehäuseabschnitte herum, ausgebildet ist.

Die Verbindung kann lösbar ausgeführt sein, bevorzugt ist jedoch, dass im Bereich des Flansches eine Schweißverbindung ausgeführt ist. Jedenfalls ist die Verbindung unter den in der Abgasbehandlung üblichen Bedingungen dauerhaft gasdicht ausgeführt.

Auch hier ist bevorzugt, dass sich die Abgasbehandlungseinheit bis hin zum Flansch erstreckt, also insbesondere so angeordnet ist, dass zwischen Flansch und dem Eintritt der Abgase in die Abgasbehandlungseinheit kein (großer) frei durchströmbarer Abschnitt des zweiten Gehäuseabschnitts vorgesehen ist. Gegebenenfalls ist auch möglich, dass die erste Abgasbehandlungseinheit über den Flansch bzw. den Kragen des ersten Gehäuseabschnitts hinausragt und sich im montierten Zustand dann in den ersten Gehäuseabschnitt hinein erstreckt.

Gemäß einer Weiterbildung der Abgasbehandlungsvorrichtung bildet nur entweder der erste Gehäuseabschnitt oder der zweite Gehäuseabschnitt wenigstens eine Strömungsumlenkung. Das heißt mit anderen Worten insbesondere, dass ein Gehäuseabschnitt im Wesentlichen nur zur Aufnahme einer Abgasbehandlungseinheit und der andere Gehäuseabschnitt zu einem überwiegenden Teil nur zur Strömungsumlenkung ausgebildet sind. Bevorzugt bildet der Gehäuseabschnitt mit der Strömungsumlenkung zumindest eine Strömungsumlenkung um ca. 80° oder ca. 110° oder sogar ca. 180°. Gegebenenfalls ist auch möglich, dass mehrere Strömungsumlenkungen hintereinander und/oder für Teilabgasströme realisiert sind.

Darüber hinaus wird als vorteilhaft angesehen, dass der zweite Gehäuseabschnitt mit einem Mantel der ersten Abgasbehandlungseinheit ausgeführt ist. Damit ist insbesondere gemeint, dass Abgasbehandlungseinheiten üblicherweise selbst einen Mantel bzw. ein Mantelrohr aufweisen, mit dem diese direkt oder indirekt verbunden sind. Ist die Abgasbehandlungseinheit beispielsweise mit metallischen Komponenten (Blech, Vlies, Gitter, ...) aufgebaut, können diese am Mantelrohr angelötet sein. Für den Fall, dass die Abgasbehandlungseinheit einen (teilweise oder vollständig) keramischen Verbund aufweist, kann dieser in dem Mantel verpresst angeordnet sein. Dabei bildet der Mantel im Wesentlichen die äußere Kontur der Abgasbehandlungseinheit ab, das heißt mit anderen Worten auch, dass die Abgasbehandlungseinheit den zweiten Gehäuseabschnitt bzw. den Mantel (nahezu) vollständig ausfüllt. In diesem Falle können sich insbesondere die Materialien vom Mantel und dem ersten Gehäuseabschnitt unterscheiden. Dabei sollte gegebenenfalls sichergestellt werden, dass im Bereich der Verbindung geeignete Materialstärken bereitgestellt werden, um eine stabile Verbindung von erstem Gehäuseabschnitt und zweitem Gehäuseabschnitt zu realisieren.

Außerdem kann vorteilhaft sein, dass bei der Abgasbehandlungsvorrichtung mindestens ein, in den ersten Gehäuseabschnitt hineinragender und vom ersten Gehäuseabschnitt beabstandeter Strömungskanal vorgesehen ist. Damit können der Gehäuseabschnitt und der Strömungskanal z. B. eine zentrale Rohrströmung und eine äußere Ringströmung realisieren, wobei üblicherweise dann auch eine Strömungsumlenkung mit dem ersten Gehäuseabschnitt gebildet ist. Der beabstandete Strömungskanal kann beispielsweise nach Art einer Verlängerung einer Abgasleitung ausgebildet sein, die in den ersten Gehäuseabschnitt hineinragt. Weiter ist bevorzugt, dass dieser beabstandete Strömungskanal sich über die Hälfte der Erstreckung des Gehäuseabschnitts hinein erstreckt und gegebenenfalls insbesondere auch die Öffnung hin zum zweiten Gehäuseabschnitt passiert.

Gerade in diesem Zusammenhang kann es auch vorteilhaft sein, wenn der mindestens eine Strömungskanal ein Tragelement für zumindest eine weitere Abgasbehandlungseinheit ist. Das heißt mit anderen Worten auch, dass der Strömungskanal so stabil ausgeführt bzw. angeordnet ist, dass dieser selbst eine Abgasbehandlungseinheit aufnehmen und halten kann. Demnach ist der Strömungskanal beispielsweise als selbsttragendes Rohr ausgebildet, in dessen Inneren oder an dessen äußeren Umfang eine Abgasbehandlungseinheit vorgesehen sein kann.

Ganz besonders bevorzugt ist auch eine Ausführungsvariante, bei der die erste Abgasbehandlungseinheit ein Partikelabscheider ist. Dies trifft insbesondere dann zu, wenn die Abgasbehandlungseinheit mit einem Diesel-Motor zusammenwirkt. Gegebenenfalls kann diese erste Abgasbehandlungseinheit, insbesondere wenn ein Mager-Motor oder Otto-Motor das Abgas produziert, mit einem Stickoxid-Adsorber (NOx-Adsorber) ausgeführt sein. Der Partikelabscheider kann keramischer und/oder metallischer Natur sein. Dabei sind so genannte Wall-Flow-Filter ebenso geeignet wie so genannte "offene Partikelabscheider", bei denen interne Bypässe vorgesehen sind, so dass das Abgas am Filtermedium vorbeiströmen kann.

Schließlich wird auch vorgeschlagen, dass der erste Gehäuseabschnitt mit einem Sensor ausgeführt ist. Dabei wird der Sensor bevorzugt dort angeordnet, wo ein freier Querschnitt bzw. ein unverbauter Bereich mit dem ersten Gehäuseabschnitt gebildet ist. Dies trifft beispielsweise im Bereich der Strömungsumlenkung zu. Wenn Informationen über einen spezifizierbaren Anteil des Abgases und/oder der Abgasbehandlungseinheit genügen, kann sich der wenigstens eine Sensor auch in die Abgasbehandlungseinheit hinein erstrecken (integrierte Anordnung).

Eine besonders bevorzugte und kompakte Abgasbehandlungsvorrichtung ist dann realisiert, wenn mehrere Abgasbehandlungseinheiten vorgesehen sind, die mit einer Überdeckung angeordnet sind. Das bedeutet mit anderen Worten z. B., dass mindestens zwei Abgasbehandlungseinheiten mit unterschiedlicher Ausrichtung (Orientierung bzw. Lage) überdeckend angeordnet sind. "Überdeckung" liegt zum Beispiel bei einer windschiefen Anordnung oder einer Anordnung mit sich kreuzenden Zentrumsachsen vor. Ganz besonders erfolg dabei die Strömungsumlenkung in einem Gehäuseabschnitt derart, dass das Abgas aus einer Abgasbehandlungseinheit ausströmt mit einer ersten Strömungsrichtung, dann umgelenkt sowie ggf. teilweise außen an der Abgasbehandlungseinheit vorbei geführt wird, und mit einer zur ersten Strömungsrichtung verschiedenen Strömungsrichtung wieder in die folgende Abgasbehandlungseinheit eintritt.

Bevorzugt findet die Erfindung Anwendung bei Kraftfahrzeugen mit einer Verbrennungskraftmaschine (insbesondere betrieben mit Luftüberschuss) und einer Abgasanlage aufweisend wenigstens einen Turbolader. Das Kraftfahrzeug weist dabei weiterhin eine hier erfindungsgemäß beschriebene Abgasbehandlungsvorrichtung auf, wobei die wenigstens eine Abgasbehandlungsvorrichtung dem Turbolader direkt nachgeordnet ist. Damit wird insbesondere zum Ausdruck gebracht, dass die Abgasbehandlungsvorrichtung unmittelbar dem Turbolader strömungstechnisch nachgeschaltet ist, das Abgas also vom Turbolader direkt in die Abgasbehandlungsvorrichtung einströmt.

Die Erfindung sowie das technische Umfeld werden nachfolgend anhand der Figuren näher erläutert Die in den Figuren jeweils angeführten Bezugszeichen betreffen gleiche Teile. Die Figuren zeigen besonders bevorzugte Ausführungsvarianten der Erfindung, auf die die Erfindung jedoch nicht beschränkt ist. Es zeigen Schematisch:
- Fig. 1:: eine erste Ausführungsvariante der erfindungsgemäßen Abgasbehandlungsvorrichtung,
- Fig. 2:: ein Kraftfahrzeug mit einer ersten Ausführungsvariante einer Abgasanlage,
- Fig. 3:: ein Kraftfahrzeug mit einer zweiten Ausführungsvariante einer Abgasanlage,
- Fig. 4:: eine Abgasbehandlungsvorrichtung,
- Fig. 5:: eine Abgasbehandlungsvorrichtun, rund
- Fig. 6:: eine Draufsicht auf eine Abgasbehandlungseinheit.

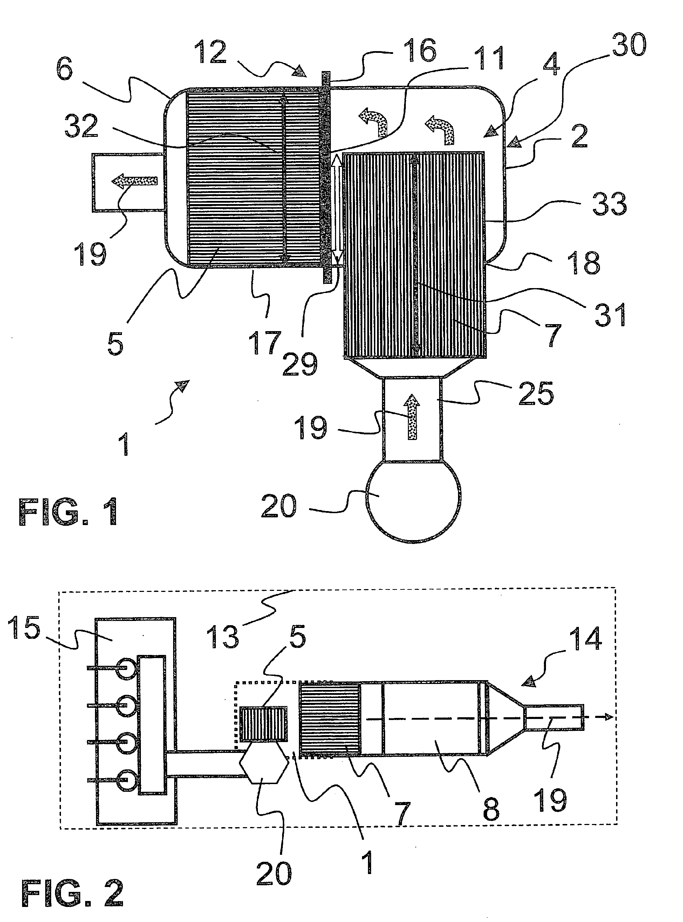

Fig. 1 zeigt in einem Querschnitt eine erste Ausführungsvariante einer Abgasbehandlungsvorrichtung 1. Insoweit ist eine Abgasbehandlungsvorrichtung 1 gezeigt, die ein Gehäuse 30 aufweist mit einer in das Gehäuse 30 beabstandet hineinragenden zweiten Abgasbehandlungseinheit 7 und einer zur zweiten Abgasbehandlungseinheit 7 seitliche angeordnete Öffnung 11 im Gehäuse 30. Die (einzige) Öffnung 11 ist dabei so groß und so positioniert, dass eine signifikante Überdeckung 29 gebildet ist, demnach also ein wesentlicher Anteil des Durchmessers 32 der Öffnung 11 der Umfangsfläche 33 der zweiten Abgasbehandlungseinheit 7 gegenüberliegt. Bevorzugt ist ein so großer Anteil der Länge 31 der zweiten Abgasbehandlungseinheit 7 in das Gehäuse 30 (mit einem Abstand zum Gehäuse 30, insbesondere unter Bildung eines Ringraumes) hineinragend ausgebildet, dass die Öffnung 11 (und ggf. eine weitere Abgasbehandlungseinheit) zu mehr als 50 % im Bereich der zweiten Abgasbehandlungseinheit 7 angeordnet ist.

Unten rechts ist dabei schematisch ein Turbolader 20 dargestellt. Von dort strömt das Abgas entlang einer Strömungsrichtung 19 durch eine Abgasleitung 25 direkt gradlinig in eine zweite Abgasbehandlungseinheit 7. Diese zweite Abgasbehandlungseinheit 7 kann ein katalytischer Konverter (insbesondere ein so genannter Oxidationskatalysator) sein, ein Stickoxid-Adsorber oder auch eine Kombination von beiden, insbesondere im Falle einer Anwendung im Zusammenhang mit einem Diesel-Motor. Für den Fall der Anwendung einer solchen Abgasbehandlungseinheit mit einem Otto-Motor könnte diese zweite Abgasbehandlungseinheit 7 auch als Drei-Wege-Katalysator ausgeführt sein.

Aus dieser zweiten Abgasbehandlungseinheit 7 strömt das Abgas weiter in den ersten Gehäuseabschnitt 2, der eine Strömungsumlenkung 4 ausbildet. Zu diesem Zweck erstreckt sich die zweite Abgasbehandlungseinheit 7 zumindest teilweise in den ersten Gehäuseabschnitt 2 hinein und ist an diesem über eine Schweißnaht 18 verbunden. Der erste Gehäuseabschnitt 2 bildet zudem eine Öffnung 11 aus, durch die das Abgas den ersten Gehäuseabschnitt 2 wieder verlässt. Dabei liegt die Öffnung 11 so, dass eine in etwa 90°-Umlenkung des Abgases im Bereich der Strömungsumlenkung 4 mit dem ersten Gehäuseabschnitt 2 realisiert ist. Die Öffnung 11 ist dabei außen mit einem Flansch 16 ausgebildet, der letztendlich eine Verbindung 12 mit dem zweiten Gehäuseabschnitt 6 ausbildet. Die Ausbildung der Öffnung 11 bzw. die Anordnung des zweiten Gehäuseabschnitts 6 bzw. der ersten Abgasbehandlungseinheit 5 erfolgt dabei so, dass diese seitlich die zweite Abgasbehandlungseinheit 7 überdeckt. Bevorzugt ist dabei, dass die Überdeckung zumindest 50 % beträgt (bezogen auf die Öffnung 11 bzw. die Stirnseite der ersten Behandlungseinheit 5), ganz bevorzugt mindestens 80 %. Dadurch kann eine besonders platzsparende Anordnung beider Abgasbehandlungseinheiten erreicht werden.

Die direkte Verbindung von erstem Gehäuseabschnitt 2 und zweitem Gehäuseabschnitt 6 über den Flansch 16 kann zusätzlich mit einer Schweißnaht ausgeführt sein. Zudem kann der zweite Gehäuseabschnitt 6 auch unmittelbar den Mantel 17 der ersten Abgasbehandlungseinheit 5 bilden. Diese erste Abgasbehandlungseinheit 5 kann beispielsweise ein Filter sein (insbesondere bei einem Diesel-Motor) und/oder ein Stickoxid-Adsorber (insbesondere bei der Anwendung mit einem mageren Otto-Motor). Unter Umständen ist auch möglich, gerade wenn eine zweite Abgasbehandlungseinheit 7 vorgesehen ist, die erste Abgasbehandlungseinheit 5 zu entfernen bzw. weiter in Strömungsrichtung 19 stromabwärts anzuordnen. Gerade diese überdeckende Anordnung der Öffnung 11 und der zweiten Abgasbehandlungseinheit 7 führt zu einer besonders platzsparenden Gestaltung der Abgasbehandlungsvorrichtung 1 und damit auch der platzsparenden Integration einer solchen Abgasbehandlungsvorrichtung 1 im Motorraum eines Kraftfahrzeuges.

Fig. 2 veranschaulicht einen prinzipiellen Aufbau eines schematisch angedeuteten Kraftfahrzeugs 13. Dieses Kraftfahrzeug 13 weist eine Verbrennungskraftmaschine 15 auf, wobei das dort generierte Abgas über eine Abgasanlage 14 in Strömungsrichtung 19 hindurchgeführt wird. Dabei durchströmt das Abgas 19 im hier erläuterten Fall zunächst einen Abgas-Turbolader 20 und strömt dann direkt durch eine erste Abgasbehandlungseinheit 5, wird dann in der Abgasbehandlungsvorrichtung 1 umgelenkt (insbesondere mit der oben bereits angesprochenen Überdeckung der Abgasbehandlungseinheiten) und strömt dann in eine zweite Abgasbehandlungseinheit 7. Nachfolgend der zweiten Abgasbehandlungseinheit 7 können noch weitere Abgasbehandlungseinheiten vorgesehen sein, hier ist zumindest eine dritte Abgasbehandlungseinheit 8 veranschaulicht.

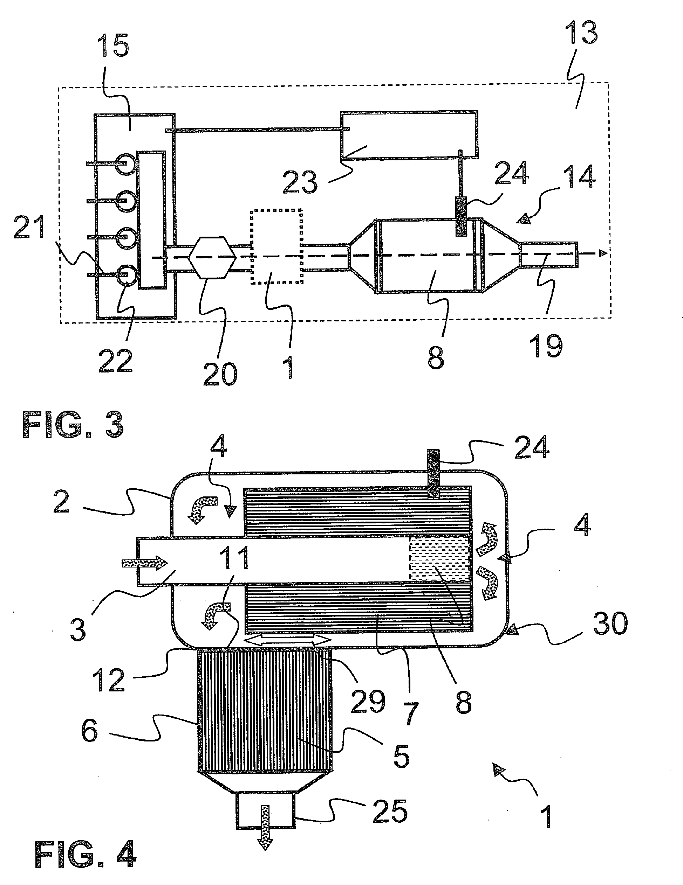

Fig. 3 zeigt nun eine weitere Möglichkeit des Aufbaus eines Kraftfahrzeugs 13 mit einer Verbrennungskraftmaschine 15. Dort ist auch schematisch für einen Fall die Kraftstoffzufuhr 21 und der Verbrennungsraum 22 dargestellt, in dem die Verbrennung stattfindet. Das Abgas wird dann zunächst wieder einem Turbolader 20 zugeführt und durchströmt anschließend die erfmdungsgemäße Abgasbehandlungsvorrichtung 1. Aufgrund ihrer Kompaktheit kann die Abgasbehandlungsvorrichtung 1 sehr motornah, also in unmittelbarer Nachbarschaft zur Verbrennungskraftmaschine 22 angeordnet sein. Das Abgas verlässt dann die Abgasbehandlungsvorrichtung 1 und strömt, beispielsweise im Unterbodenbereich, wo eine dritte Abgasbehandlungseinheit 8 vorgesehen ist. In dieser Reihenfolge durchströmt das Abgas folglich mit einer vorgegebenen Strömungsrichtung 19 dieser weiteren Ausführungsvarianten einer Abgasanlage 14. Hierbei wird auch veranschaulicht, dass ein Sensor 24 vorgesehen sein kann, der mit einer Steuerung 23 (z. B. der Motorsteuerung) zusammenarbeitet, um die Verbrennungsprozesse zu überwachen bzw. zu regeln.

In Fig. 4 ist eine Variante veranschaulicht, bei der das Abgas in die Abgasbehandlungsvorrichtung 1 über einen separaten Strömungskanal 3 einströmt, der zum ersten Gehäuseabschnitt beabstandet ausgebildet ist, sich jedoch gleichermaßen im Wesentlichen über einen Großteil der Erstreckung des ersten (nicht erfindungsgemäß gestalteten) Gehäuseabschnitts 2 hin erstreckt. Der Strömungskanal 3 ist dabei als Tragrohr ausgebildet, in dessen Innerem bereits eine dritte Abgasbehandlungseinheit 8 vorgesehen sein kann. Nach dem Durchströmen des Strömungskanals 3 erfolgt eine Strömungsumlenkung 4 im Endbereich des ersten Gehäuseabschnitts, so dass das Abgas dann wieder in den äußeren, ringförmig um den Strömungskanal 3 ausgebildeten katalytischen Konverter, zweiter Abgasbehandlungseinheit 7, einströmt. Nach Verlassen der zweiten Abgasbehandlungseinheit 7 strömt das Abgas wieder seitlich über die Öffnung 11 des ersten Gehäuseabschnitts aus, an der ein zweiter Gehäuseabschnitt 6 mit einer ersten Abgasbehandlungseinheit 5 angeordnet ist, und zwar über eine fügetechnische Verbindung 12. Das Abgas durchströmt auch diese erste Abgasbehandlungseinheit 5 und verlässt die Abgasbehandlungsvorrichtung 1 über die angedeutete Abgasleitung 25.

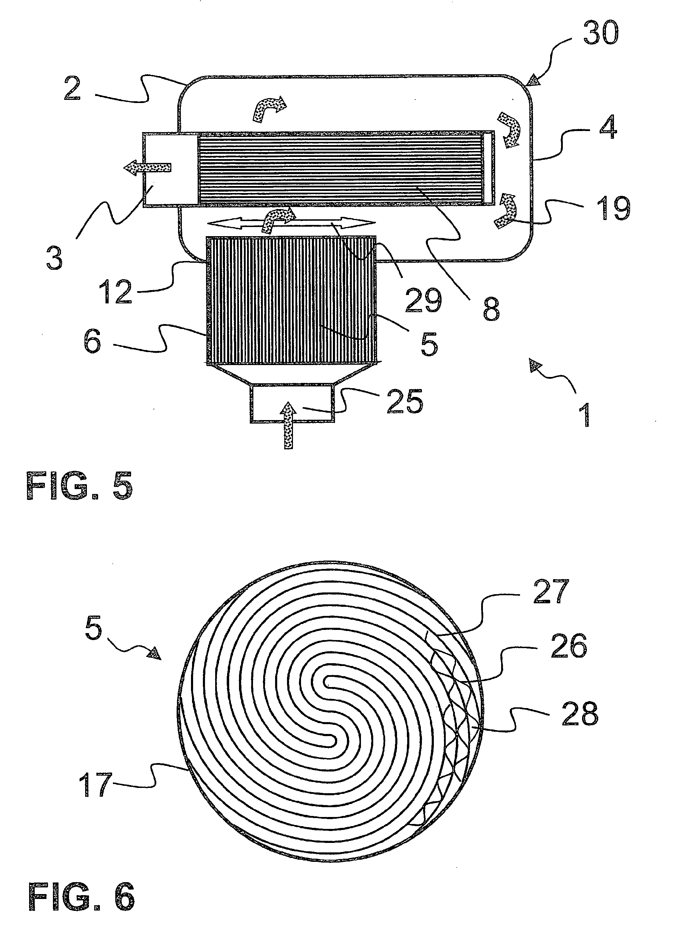

In Fig. 5 wird in umgekehrter Strömungsrichtung veranschaulicht, wie das Abgas zunächst durch die Abgasleitung 25 einströmt und die erste Abgasbehandlungseinheit 5 durchströmt. Diese ist in einem zweiten Gehäuseabschnitt 6 (hier insbesondere nach Art eines (nicht erfindungsgemäß gestalteten) Mantelrohrs ausgebildet) angeordnet, der in die Öffnung 11 des ersten Gehäuseabschnitts 2 eintaucht und dort mit dem ersten Gehäuseabschnitt 2 via einer stoffschlüssigen Verbindung 12 verbunden ist. Der erste Gehäuseabschnitt 2 bildet dann eine zweimalige Strömungsumlenkung 4 aus, so dass letztendlich ein Eintritt des Abgases in den separaten, beabstandeten Strömungskanal 3 realisiert ist. In diesem Strömungskanal 3 ist eine weitere Abgasbehandlungseinheit 8 angeordnet, wobei erneut durch die überdeckende Anordnung der beiden Abgasbehandlungseinheiten ein besonders kompakter Aufbau erreicht werden kann. Wie mit den entsprechenden Pfeilen angedeutet, verlässt das Abgas dann in Strömungsrichtung 19 die Abgasbehandlungsvorrichtung 1.

Zur Veranschaulichung des Aufbaus einer möglichen Ausführungsvariante für eine Abgasbehandlungseinheit 5 dient die Fig. 6. Dort ist zunächst ein Mantel 17 dargestellt, hier in zylindrischer Form, der die äußere Kontur der ersten Abgasbehandlungseinheit 5 charakterisiert. Im Inneren des Mantels 17 sind mehrere Lagen vorgesehen, die Kanäle 28 ausbilden. Für den Fall eines katalytischen Konverters können beispielsweise abwechselnd strukturierte Lagen 26 und glatte Lagen 27 vorgesehen sein, die den Querschnitt im Inneren des Mantels 7 ausfüllen und damit eine Vielzahl solcher Kanäle 28 bilden. Ein Teil dieser Lagen kann auch mit Kanalverengungselementen, Strömungsumlenkungselementen, porösen Materialien, Öffnungen und dergleichen ausgeführt sein. So lassen sich neben Katalysator-Trägerkörpern auch Filter, Adsorber und dergleichen realisieren. Während Fig. 6 im Wesentlichen den metallischen Aufbau einer solchen Abgasbehandlungseinheit veranschaulicht, können auch extrudierte, keramische Trägerelemente eingesetzt werden.

Das erfindungsgemäße System ist demnach bevorzugt folgendermaßen aufgebaut:
- Aus der Turbine strömt das Abgas direkt und gradlinig in eine Abgasbehandlungseinheit.
- Diese Abgasbehandlungseinheit kann ein Oxidationskatalysator sein, ein NOx-Adsorber oder auch eine Kombination von beiden im Falle der Dieselanwendung. Im Falle der Otto-Anwendung ist diese Abgasbehandlungseinheit bevorzugt ein so genannter 3-Wege-Katalysator.
- Aus dieser Abgasbehandlungseinheit strömt das Abgas in eine Abström-/Umlenkkammer. Die Umlenkkammer hat einen Austrittsflansch etwa 90° zur ursprünglichen Strömungsrichtung. Der Austrittsflansch liegt zumindest teilweise im Bereich (unter) der obigen Abgasbehandlungseinheit (Überdeckung).
- An den Flansch wird eine weitere Abgasbehandlungseinheit direkt angeflanscht. Diese weitere Abgasbehandlungseinheit kann entweder ein Filter sein (z. B. bei einem Diesel-Motor) und/oder ein NOx-Adsorber (z. B. bei einem mageren Ottomotor).
- Wenn es diese weitere Abgasbehandlungseinheit nicht geben sollte, wird ein Austrittskonus (mit einem sich verjüngenden Querschnitt) an die Umlenkkammer angebracht, um den Übergang hin zum Abgasrohr zu schaffen.

### Bezugszeichenliste

- 1: Abgasbehandlungsvorrichtung
- 2: erster Gehäuseabschnitt
- 3: Strömungskanal
- 4: Strömungsumlenkung
- 5: erste Abgasbehandlungseinheit
- 6: zweiter Gehäuseabschnitt
- 7: zweite Abgasbehandlungseinheit
- 8: dritte Abgasbehandlungseinheit
- 9: erster Querschnitt
- 10: zweiter Querschnitt
- 11: Öffnung
- 12: Verbindung
- 13: Kraftfahrzeug
- 14: Abgasanlage
- 15: Verbrennungskraftmaschine
- 16: Flansch
- 17: Mantel
- 18: Schweißnaht
- 19: Strömungsrichtung
- 20: Turbolader
- 21: Kraftstoffzufuhr
- 22: Verbrennungsraum
- 23: Steuerung
- 24: Sensor
- 25: Abgasleitung
- 26: strukturierte Lage
- 27: glatte Lage
- 28: Kanal
- 29: Überdeckung
- 30: Gehäuse
- 31: Länge
- 32: Durchmesser
- 33: Umfangsfläche

## Patentansprüche

1. Abgasbehandlungsvorrichtung (1), zumindest aufweisend ein Gehäuse (30), eine wenigstens teilweise beabstandet zum Gehäuse (30) angeordnete zweite Abgasbehandlungseinheit (7), wobei die zweite Abgasbehandlungseinheit (7) eine Länge (31) sowie eine Umfangsfläche (33) hat und die zweite Abgasbehandlungseinheit (7) in das Gehäuse (30) hineinragt, und eine seitlich zur zweiten Abgasbehandlungseinheit (7) angeordnete Öffnung (11) im Gehäuse (30) vorgesehen ist, die der Umfangsfläche (33) gegenüber liege und die sich seitlich zumindest über 50 % der hineinragenden zweiten Abgasbehandlungseinheit (7) erstreckt so dass der Durchmesser (32) der Öffnung (11) den Großteil des hineinragenden Anteils der Länge (31) der zweiten Abgasbehandlungseinheit (7) überdeckt,
wobei ein erster Gehäuseabschnitt (2) mit der Öffnung (11) und mindestens ein, vom ersten Gehäuseabschnitt (2) hervorstehender, zweiter Gehäuseabschnitt (6) vorgesehen ist, der schräg zum ersten Gehäuseabschnitt (2) an dessen Öffnung (11) angeordnet ist, eine Verbindung (12) an der Öffnung (11) bildet und eine erste Abgasbehandlungseinheit (5) umfasst.

2. Abgasbehandlungsvorrichtung (1) nach Patentanspruch 1, bei der die Verbindung (12) mit einem Flansch (16) ausgeführt ist und die eine erste Abgasbehandlungseinheit (5) sich bis zum Flansch (16) erstreckt.

3. Abgasbehandlungsvorrichtung (1) nach einem der vorhergehenden Patentansprüche, bei der nur entweder der erste Gehäuseabschnitt (2) oder der zweite Gehäuseabschnitt (6) wenigstens eine Strömungsumlenkung (4) bildet.

4. Abgasbehandlungsvorrichtung (1) nach einem der vorhergehenden Patentansprüche, bei der der zweite Gehäuseabschnitt (6) mit einem Mantel (17) der ersten Abgasbehandlungseinheit (5) ausgeführt ist.

5. Abgasbehandlungsvorrichtung (1) nach einem der vorhergehenden Patentansprüche, bei der mindestens ein, in den ersten Gehäuseabschnitt (2) hineinragender und vom ersten Gehäuseabschnitt (2) beabstandeter Strömungskanal (3), vorgesehen ist.

6. Abgasbehandlungsvorrichtung (1) nach Patentanspruch 5, bei der der mindestens eine Strömungskanal (3) ein Tragelement für zumindest eine weitere Abgasbehandlungseinheit (7, 8) ist,

7. Abgasbehandlungsvorrichtung (1) nach einem der vorhergehenden Patentansprüche, bei der die erste Abgasbehandlungseinheit (5) ein Partikelabscheider ist.

8. Abgasbehandlungsvorrichtung (1) nach einem der vorhergehenden Patentansprüche, bei der der erste Gehäuseabschnitt (2) mit einem Sensor (16) ausgeführt ist.

9. Abgasbehandlungsvorrichtung (1) nach einem der vorhergehenden Patentansprüche, bei der mehrere Abgasbehandlungseinheiten vorgesehen sind, die mit einer Überdeckung (29) angeordnet sind.

10. Kraftfahrzeug (13) mit einer Verbrennungskraftmaschine (15) und einer Abgasanlage (14) aufweisend wenigstens einen Turbolader (20) und eine Abgasbehandlungsvorrichtung (1) nach einem der vorhergehenden Patentansprüche, wobei die wenigstens eine Abgasbehandlungsvorrichtung (1) dem Turbolader (20) direkt nachgeordnet ist.

## Claims

1. Exhaust-gas treatment device (1) at least having a housing (30), a second exhaust-gas treatment unit (7) at least partially arranged spaced apart from the housing (30), wherein the second exhaust-gas treatment unit (7) has a length (31) and a circumferential surface (33) and the second exhaust-gas treatment unit (7) projects into the housing (30), and an opening (11) is provided, which is arranged laterally with respect to the second exhaust-gas treatment unit (7), in the housing (30), which opening (11) is positioned opposite to the circumferential surface (33) and extends laterally at least over 50% of the second exhaust-gas treatment unit (7) projecting into the housing, so that the diameter (32) of the opening (11) overlaps most of that part of the length (31) of the second exhaust-gas treatment unit (7) which projects into the housing, wherein a first housing portion (2) is provided which has the opening (11), and at least one second housing portion (6) is provided which projects from the first housing portion (2) and which is arranged obliquely with respect to the first housing portion (2) on the opening (11) thereof and which forms a connection (12) at the opening (11) and which comprises a first exhaust-gas treatment unit (5).

2. Exhaust-gas treatment device (1) according to claim 1, in which the connection (12) is formed with a flange (16) and the first exhaust-gas treatment unit (5) extends as far as the flange (16).

3. Exhaust-gas treatment device (1) according to one of the preceding claims, in which only either the first housing portion (2) or the second housing portion (6) forms at least one flow diversion (4).

4. Exhaust-gas treatment device (1) according to one of the preceding claims, in which the second housing portion (6) is formed with a casing (17) of the first exhaust-gas treatment unit (5).

5. Exhaust-gas treatment device (1) according to one of the preceding claims, in which at least one flow channel (3) is provided which projects into the first housing portion (2) and which is spaced apart from the first housing portion (2).

6. Exhaust-gas treatment device (1) according to claim 5, in which the at least one flow channel (3) is a supporting element for at least one further exhaust-gas treatment unit (7, 8).

7. Exhaust-gas treatment device (1) according to one of the preceding claims, in which the first exhaust-gas treatment unit (5) is a particle separator.

8. Exhaust-gas treatment device (1) according to one of the preceding claims, in which the first housing portion (2) is formed with a sensor (16).

9. Exhaust-gas treatment device (1) according to one of the preceding claims, in which a plurality of exhaust-gas treatment units are provided which are arranged with an overlap (29).

10. Motor vehicle (13) having an internal combustion engine (15) and having an exhaust system (14) having at least one turbocharger (20) and an exhaust-gas treatment device (1) according to one of the preceding claims, wherein the at least one exhaust-gas treatment device (1) is positioned directly downstream of the turbocharger (20).

## Revendications

1. Dispositif de traitement de gaz d'échappement (1), présentant au moins un boîtier (30), une deuxième unité de traitement de gaz d'échappement (7) disposée au moins en partie à distance du boîtier (30), la deuxième unité de traitement de gaz d'échappement (7) présentant une longueur (31) ainsi qu'une surface périphérique (33) et la deuxième unité de traitement de gaz d'échappement (7) pénétrant dans le boîtier (30), et une ouverture (11) disposée latéralement par rapport à la deuxième unité de traitement de gaz d'échappement (7) étant prévue dans le boîtier (30), laquelle est en regard de la surface périphérique (33) et s'étend latéralement sur au moins 50 % de la deuxième unité de traitement de gaz d'échappement (7) s'étendant à l'intérieur, de telle sorte que le diamètre (32) de l'ouverture (11) recouvre la majeure partie de la proportion s'étendant à l'intérieur de la longueur (31) de la deuxième unité de traitement de gaz d'échappement (7), une première portion de boîtier (2) étant pourvue de l'ouverture (11) et au moins une deuxième portion de boîtier (6) faisant saillie depuis la première portion de boîtier (2) étant prévue, laquelle est disposée obliquement par rapport à la première portion de boîtier (2) au niveau de son ouverture (11), forme une connexion (12) au niveau de l'ouverture (11) et comprend une première unité de traitement de gaz d'échappement (5).

2. Dispositif de traitement de gaz d'échappement (1) selon la revendication 1, dans lequel la connexion (12) est réalisée avec une bride (16) et la première unité de traitement de gaz d'échappement (5) s'étend jusqu'à la bride (16).

3. Dispositif de traitement de gaz d'échappement (1) selon l'une quelconque des revendications précédentes, dans lequel seulement la première portion de boîtier (2) ou la deuxième portion de boîtier (6) forme au moins une déviation de l'écoulement (4).

4. Dispositif de traitement de gaz d'échappement (1) selon l'une quelconque des revendications précédentes, dans lequel la deuxième portion de boîtier (6) est réalisée avec une enveloppe (17) de la première unité de traitement de gaz d'échappement (5).

5. Dispositif de traitement de gaz d'échappement (1) selon l'une quelconque des revendications précédentes, dans lequel au moins un canal d'écoulement (3) pénétrant dans la première portion de boîtier (2) et espacé de la première portion de boîtier (2) est prévu.

6. Dispositif de traitement de gaz d'échappement (1) selon la revendication 5, dans lequel l'au moins un canal d'écoulement (3) est un élément porteur pour au moins une unité de traitement de gaz d'échappement supplémentaire (7, 8).

7. Dispositif de traitement de gaz d'échappement (1) selon l'une quelconque des revendications précédentes, dans lequel la première unité de traitement de gaz d'échappement (5) est un séparateur de particules.

8. Dispositif de traitement de gaz d'échappement (1) selon l'une quelconque des revendications précédentes, dans lequel la première portion de boîtier (2) est réalisée avec un capteur (16).

9. Dispositif de traitement de gaz d'échappement (1) selon l'une quelconque des revendications précédentes, dans lequel plusieurs unités de traitement de gaz d'échappement sont prévues, lesquelles sont disposées avec un recouvrement (29).

10. Véhicule automobile (13) comprenant un moteur à combustion interne (15) et une installation de gaz d'échappement (14) présentant au moins un turbocompresseur (20) et un dispositif de traitement de gaz d'échappement (1) selon l'une quelconque des revendications précédentes, dans lequel l'au moins un dispositif de traitement de gaz d'échappement (1) est monté directement après le turbocompresseur (20).
